# EUROPEAN PATENT SPECIFICATION

(11) **EP 1 401 608 B1**
(45) Date of publication and mention of the grant of the patent: **22.03.2006**
(21) Application number: 02782493.7
(22) Date of filing: 02.07.2002
(51) Int. Cl.: B23K 9/20

(54) **METHOD AND DEVICE FOR WELDING AN ALUMINUM-BASED STUD**
VERFAHREN UND VORRICHTUNG ZUM SCHWEISSEN EINES ZAPFENS AUF ALUMINIUMBASIS
PROCEDE ET DISPOSITIF DE SOUDAGE D'UN GOUJON A BASE D'ALUMINIUM

(30) Priority: 04.07.2001 JP 2001203570
(43) Date of publication of application: 31.03.2004
(73) Proprietor: Newfrey LLC, Newark, Delaware 19711 (US)
(72) Inventor: SAKODA, Kanji, c/o Pop Rivet Fastener K.K., Toyohashi-shi, Aichi-ken (JP)
(74) Representative: Haar, Lucas Heinz Jörn
(86) International application number: PCT/US2002/021079
(87) International publication number: WO 2003/004209

(56) References cited:
- DE-A- 10 001 344
- DE-A- 19 539 791
- DE-A- 19 925 628
- US-A- 5 938 945

## Description

### BACKGROUND AND SUMMARY OF THE INVENTION

The present invention relates to a method and device for welding an aluminum or aluminum alloy stud and, more specifically, to a welding method and device in which a stud is brought into contact with a base material, voltage is applied between the stud and the base material, the stud is lifted slightly off the base material, a pilot arc with a small current and subsequently a main arc with a large current is generated between the stud and the base material, the tip of the stud and the section of the base material to be melted are melted, pressure is applied to the tip of the stud and the section of the base material that has been melted, and the stud and base material are welded together after the current has been cut off.

In a method of this kind known from DE-A-19925628, an aluminium stud is brought into contact with a base material of aluminium, voltage is applied between the stud and the base material, the stud is lifted slightly off the base material, and at first a cleaning arc having a cleaning current intensity is generated between the stud and the base material. Then the polarity of the voltage is reversed and a pilot arc with a small pilot current intensity and subsequently a main arc with a large welding current intensity is generated between the stud and the base material, the tip of the stud and the section of the base material to be melted are melted. After the current has been cut off and the welding current has dropped to 0 ampere, there is a specific waiting period to allow the pool of aluminium melt to become doughy. Only then the stud is dipped into the base material, and the stud and base material are welded together.

US-A-5938945 discloses a method of welding weld studs to a workpiece, in particular of aluminium in each case, by the stroke ignition method, in which the stroke height of the weld stud is altered as a function of the measured arc voltage and optionally of the arc firing time. In this method the weld stud is immersed into the pool of melt after a predetermined period of time of between 5 and 10 ms after the welding current has been switched off.

From DE-A-19539791 a method and a device for welding studs on a workpiece of aluminium is known, wherein the stud is lifted from the workpiece and an arc is generated during a predetermined welding time. At the end of the welding time the stud is moved toward the melt pool with a high speed and shortly before reaching the melt pool, e.g. after 10 ms, the dipping speed of the stud is remarkably reduced. Starting with the time of the speed reduction the dipping time amounts to 10 to 50 ms.

Another multi-stage welding process and a device for the arc welding of a stud to a metallic structure is disclosed in DE-A-10001344. This process comprises first and second cleaning stages which are seperated by switching off the arc and resting of the stud in a position spaced from the structure surface. The second cleaning stage can pass in smooth transition with an uninterrupted arc into the actual welding process, which is ended by lowering the weld stud into the melt with simultaneous switching off the current.

In Japanese Utility Model Application Disclosure No. 5-49172 and Japanese Utility Model Application Disclosure No. 6-48967, a pilot arc with a small amount of current is generated, the main arc with a large amount of current is generated, the tip of the stud and the section of the base material to be melted are melted, pressure is applied to the tip of the stud and the section of the base material that has been melted and the stud and base material are welded together (the so-called drawn arc method). In automobile manufacturing, aluminum and aluminum alloy vehicle frames and bodies are also increasingly being used because of their lighter weight. In Japanese Utility Model Application No. 63-173583, a T stud consisting of a large-diameter head and a rod-shaped shaft is welded to a vehicle frame, and a clip for securing a member such as wiring is fastened to the T stud.

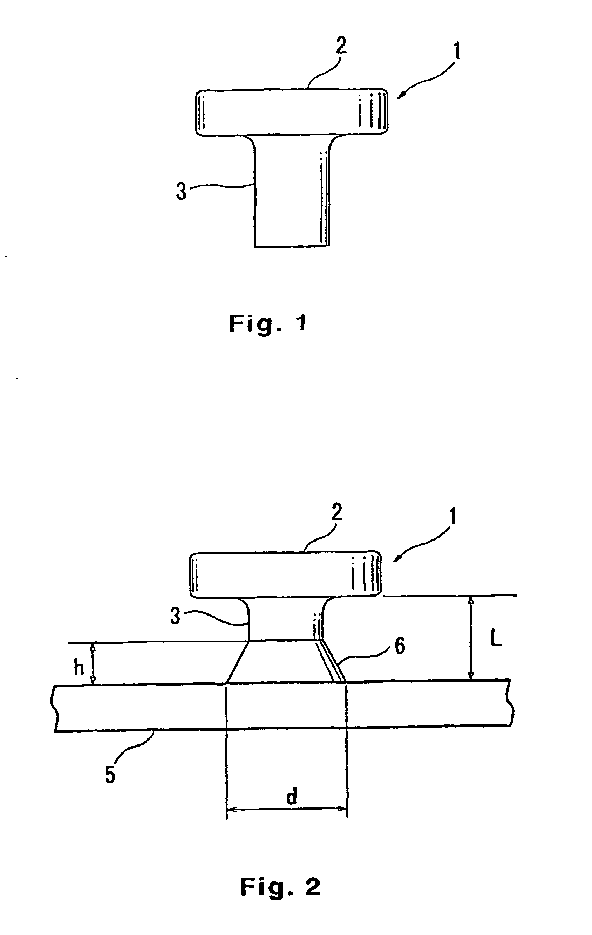

Technologies have already been developed to weld T studs to vehicle bodies and frames when the bodies and the T studs are made from iron-based metals. In these welding technologies, the T stud is welded to the body or frame while maintaining a constant level of strength. For example, when the iron-based T stud 1 in Figure 1 has a 5-mm diameter head 2 and a 3-mm long, 3-mm diameter rod-shaped shaft 3, the height of the stud 1 below the neck after being welded to a base material 5 such as an iron-based body is about 2.6 mm, the reinforcing height (h) of the reinforcement 6 is less than 1 mm, and the diameter (d) of the reinforcement 6 is less than 5 mm. In this way, enough space remains on the shaft 3 of the molten T stud 1 to accommodate the clip disclosed in Japanese Utility Model Application Disclosure No. 63-173583, and attach the clip properly and securely.

However, this technology was developed to weld an iron-based T stud to an iron-based base material. When the base material of the body or frame consists of an aluminum-based metal such as aluminum or an aluminum alloy, it is difficult to weld an iron-based T stud to it. If a stud consisting of an aluminum-based metal such as aluminum or an aluminum alloy is welded in the same manner as an iron-based stud, the proper height below the neck, reinforcing height, and welding spot diameter cannot be reliably obtained. In addition, the strength after welding varies and a stable welding strength cannot be obtained. Therefore, the purpose of the present invention is to provide a stud welding method and device able to reliably obtain the desired welding profile and welding strength even when the stud is made from aluminum or an aluminum alloy.

In accordance with the present invention, a method of welding a stud is provided, wherein an aluminum or aluminum alloy stud is brought into contact with an aluminum or aluminum alloy base material, voltage is applied between the stud and the base material, the stud is lifted slightly off the base material, a pilot arc with a small amount of current is generated, the main arc with a large amount of current is generated, the tip of the stud and the section of the base material to be melted are melted, lifting of the stud is stopped at a time before the main arc current has been cut off, pressure is applied to the tip of the stud and the section of the base material that has been melted in under five milliseconds after the main arc current has been cut off and the stud and base material are welded together. The current can be divided into stages and incrementally increased as the main arc is generated from beginning to end.

The present invention also includes a welding device, wherein an aluminum or aluminum alloy stud is brought into contact with an aluminum or aluminum alloy base material, voltage is applied between the stud and the base material, the stud is lifted slightly off the base material, a pilot arc with a small amount of current is generated, the main arc with a large amount of current is generated, the tip of the stud and the section of the base material to be melted are melted, pressure is applied to the tip of the stud and the section of the base material that has been melted, wherein lifting of the stud is stopped at a time before the main arc current has been cut off, the molten tip of the stud is applied under pressure to the molten base in under five milliseconds after the main arc current has been terminated; and the stud and base material are welded together. Preferably the current is divided into stages from beginning to end and incrementally increased as the main arc is generated, and/or the molten tip of the stud is applied under pressure to the molten base material in under five milliseconds after the main arc current has been cut off. As a result, the desired height below the neck in the stud after welding (L in Figure 2) is reliably obtained, the welding strength is high, and the reinforcement height (h in Figure 2) and the diameter of the melted section of the base material (d in Figure 2) are kept within the proper range.

In another aspect of the welding device and method of the present invention, there are three steps and the main arc in the first step is a small-current arc effective at removing oil from the surface and surroundings of the section of the base material to be melted, the main arc in the second step is an intermediate-current arc for melting the tip of the stud and the section of the base material to be melted and for keeping the area of the section of the base material to be melted within a predetermined range, and the main arc in the third step is a large-current arc for melting the tip of the stud and the section of the base material to be melted into each other deeply. A further aspect of the present invention uses a T stud having a large-diameter head and a rod-shaped shaft, and the profile of the end of the shaft is conical with a flat tip. As a result, the arc is concentrated in the center, the reinforcement does not tilt to one side, and the height of the reinforcement is kept from getting shorter. A pilot arc is not absolutely necessary.

Still another aspect of the present invention includes a welding method, wherein an aluminum or aluminum alloy stud is brought into contact with an aluminum or aluminum alloy base material, voltage is applied between the stud and the base material, the stud is lifted slightly off the base material, an arc is generated, the tip of the stud and the section of the base material to be melted are melted, pressure is applied to the tip of the stud and the section of the base material that has been melted and the stud and base material are welded together, the current is divided into at least three stages and incrementally increased from the beginning to the end while the main arc is generated, and/or the molten tip of the aluminum or aluminum alloy stud is applied under pressure to the molten base material in under five milliseconds after the arc current has been cut off. As a result, an aluminum-based stud can be welded properly.

Similarly, in still a further aspect of the present invention, a welding device or system is used wherein an aluminum or aluminum alloy stud is brought into contact with an aluminum or aluminum alloy base material, voltage is applied between the stud and the base material, the stud is lifted slightly off the base material, an arc is generated, the tip of the stud and the section of the base material to be melted are melted, pressure is applied to the tip of the stud and the section of the base material that has been melted and the stud and base material are welded together, the current is divided into stages and incrementally increased from beginning to end as the arc is generated, and/or the molten tip of the aluminum or aluminum alloy stud is applied under pressure to the molten base material in under five milliseconds after the main arc current has been cut off. As a result, an aluminum-based stud can be welded properly.

Various embodiments of the present invention are advantageous over prior devices. For example, because the main arc current of the present invention is divided into stages and increases incrementally in this welding method, the welding area of the section of the base material to be melted is kept within the desired range when the tip of the stud is being welded to the section of the base material to be melted, the tip of the stud and the section of the base material to be melted are melted into each other deeply, and the heat introduced to the stud and base material remains constant. Because the tip of the stud is applied under pressure to the base material in less time and the short current is controlled during this time, the splattering of molten metal is reduced by the pinch effect (a phenomenon in which the large current flowing through the molten fluid constricts the fluid, the constriction reduces the flow and lessens the constriction, and the lessening of the constriction once again constricts the molten fluid). As a result, the desired height below the neck in the stud after welding (L in Figure 2) is reliably obtained, the reinforcement height (h in Figure 2) and the diameter of the melted section of the base material (d in Figure 2) are kept within the proper range, and high welding strength is maintained. Additional advantages and features of the present invention will become apparent from the following description and appended claims, taken in conjunction with the accompanying drawings.

### BRIEF DESCRIPTION OF THE DRAWINGS

Figure 1 is a front view of an iron-based T stud of the prior art;

Figure 2 is a front view of the iron-based stud in Figure 1 after welding;

Figure 3 is a block diagram of the circuit in the stud welding device of the present invention;

Figure 4 is a front view of the aluminum-based T stud in the present invention;

Figure 5 shows graphs of the timing when an arc is generated by the stud welding device of the present invention wherein (A) is a graph showing the change in the arc current over time, (B) is a graph of the stud lift distance over time, and (C) is a graph of the arc voltage between the stud and the base metal over time; and

Figure 6 is a chart showing the preferred weld parameters for different studs and materials.

### DETAILED DESCRIPTION OF THE PREFERRED EMBODIMENT

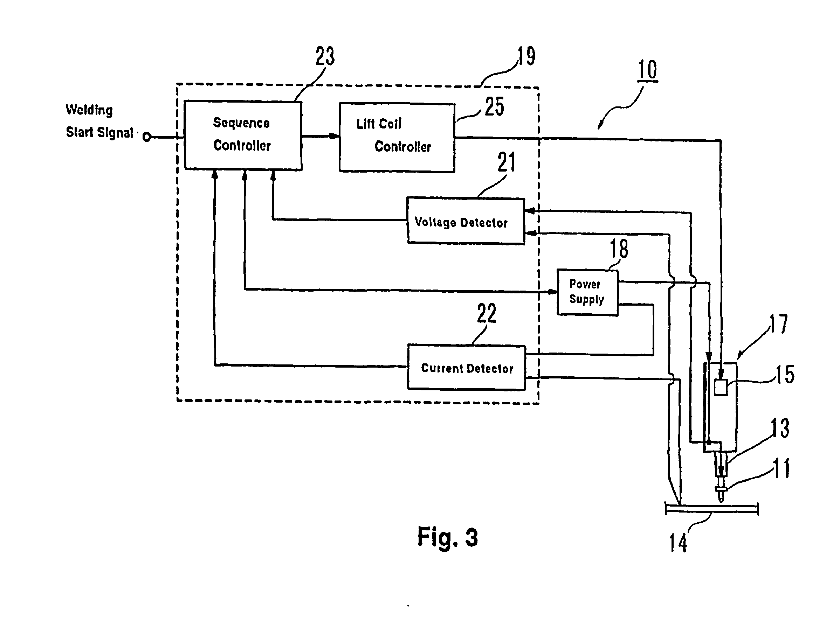

The following is an explanation of working examples of the present invention with reference to the drawings. Figure 3 is a block diagram of the circuit in a welding device 10 for welding an aluminum or aluminum alloy stud to an aluminum or aluminum alloy base material. The stud welding device 10 contains a collet 13 for holding a stud 11 at the tip, a welding gun 17 with a lift coil 15 as the lifting means for lifting the stud 11 held by the collet 13 off the base material 14, and a power source 18 connected to the welding gun to supply a specific amount of power between the stud 11 and the base material 14. It is not necessary, but the stud can also be welded in an inactive gas atmosphere such as an argon gas atmosphere. A stud-surrounding member such as a ferrule (not shown) can be installed on the collet 13 holding the stud.

A control device 19 is connected to the power source 18 and the welding gun 17. The stud welding device 10 is a so-called drawn-arc stud welding device in which a stud 11 is brought into contact with a base material 14, voltage is applied between the stud and the base material, the stud is lifted slightly off the base material, a pilot arc with a small amount of current is generated, the main arc with a large amount of current is generated, the tip of the stud 11 and the section of the base material 14 to be melted are melted, pressure is applied to the stud and the section of the base material that has been melted and the stud and base material are welded together. Therefore, the control device 19 has to control the supply of power from the power source 18 to the welding gun 17 so a pilot arc and subsequent main arc are formed between the stud 11 and the base material 14. It also has to operate the lift coil 15 in the welding gun 17 so the stud 11 is lifted off the base material 14 to a specific height and the pilot arc and subsequent main arc are generated. After a certain amount of time, the lift coil 15 has to be turned off so the stud 11 is brought into contact with the base material 14 forcibly. In the present invention, a drawn-arc welding device in which a pilot arc precedes a main arc does not have to be used. Any welding device that generates an arc between the stud and base material for arc welding can be used. In the following explanation of the working example, however, a drawn-arc stud welding device is used.

The control device 19 has an arc voltage detector 21 for detecting the voltage between the stud 11 and the base material 14 and outputting a signal depending on whether the stud is in contact with the base material or lifted off the base material. It also has a current detector 22 for detecting the welding arc current supplied from the power source 18 to the welding gun 17. The detection signals outputted from detectors 21 and 22 are sent to a sequence controller 23 for controlling the sequence of operations required to perform stud welding. The output from the current detector 22 is in-putted to the sequence controller 23, and the sequence controller 23 controls the power source 18 so the current is reduced for the pilot arc and increased for the main arc.

In the present invention, the sequence controller 23 divides the supply of current into three stages from beginning to end while the main arc is being generated and increases the current incrementally. In dividing the main arc current into three stages, the sequence controller 23 performs control operations so the main arc in the first step is a small-current arc effective at removing oil from the surface and surroundings of the section of the base material to be melted, the main arc in the second step is an intermediate-current arc for melting the tip of the stud and the section of the base material to be melted and for keeping the area of the section of the base material to be melted within a predetermined range, and the main arc in the third step is a large-current arc for melting the tip of the stud and the section of the base material to be melted into each other deeply.

The control output from the sequence controller 23 does not have to be inputted to the power source 18. It can also be inputted to a lift coil controller 25 for turning the lift coil 15 on and off. The lift coil controller 25 turns on the lift coil 15 to lift the collet 13 in the welding gun 17 against resistance from an internal spring and raise the stud 11 a specific height with respect to the base material 14 and hold the stud there while the pilot arc is generated and the stronger main arc is generated. After the main arc has properly welded the tip of the stud 11 and the section of the base material 14 to be welded, the sequence controller 23 turns off the current to the lift coil 15 for bringing the stud 11 into contact with the base material 14 forcibly. When the power is turned off, the collet 13 is lowered by the spring action of the internal spring, and the stud 11 is brought into contact with the base material 14 forcibly.

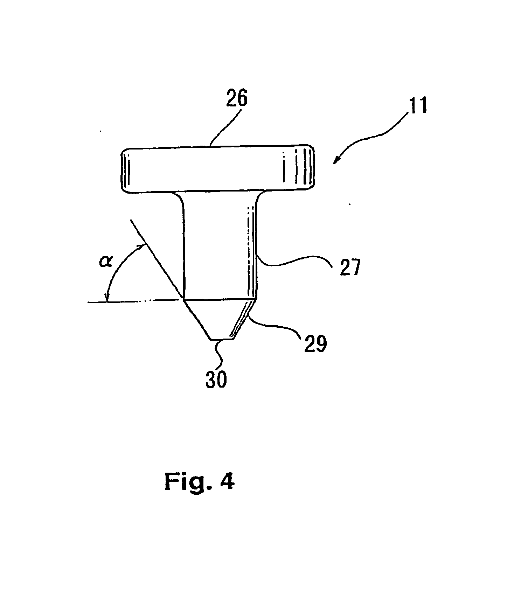

Figure 4 is a detailed depiction of the stud 11 used in the present invention. The stud 11 is made from aluminum or an aluminum alloy. It is a T stud with a large-diameter head 26 and a rod-shaped shaft. In order to be welded in the same manner as the iron-based stud 1 in Figure 2, for example, the head 26 has a diameter of 5 mm and the shaft 27 has a diameter of 3 mm. The length of the shaft 27 before welding is 3.3 to 3.7 mm, or 0.3 to 0.7 mm longer than the iron-based stud 3 in Figure 2. This allows for welding with the base material deep enough to obtain the appropriate welding strength. The tip 29 of the shaft 27 on the stud 11 is conical with a flat end. The tip surface 30 is flat with a 1.5 mm to 2 mm diameter, and the tapering angle α of the conical section is between 5 and 10°. The formation of a cone with a flat end concentrates the arc in the center, keeps the reinforcement from tilting to one side, and keeps the height of the reinforcement from getting shorter. By forming the tip 29 of the aluminum-based stud 11 of the present invention in this manner, the height of the stud 1 below the neck after being welded is about 2.6 mm, the reinforcing height (h) of the reinforcement is less than 1 mm, and the diameter (d) of the reinforcement is less than 5 mm. As a result, the welding strength is as high as the iron-based stud shown in Figure 2.

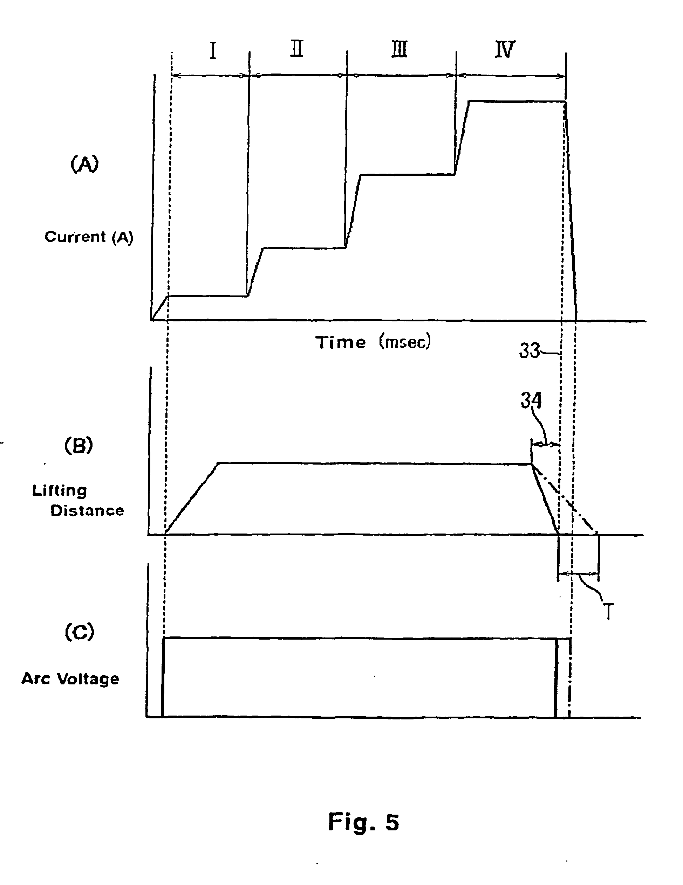

The following is an explanation of the operation of the stud welding device 10 in the present invention with reference to Figure 5 (A) through (C). When a welding start signal is sent to the sequence controller 23 in the control device 19 from the switch (not shown), the constant-voltage pilot arc current is supplied from the power source 18 to the aluminum-based stud 11 and the aluminum-based base material 14 in the initial stage denoted by Phase I in Figure 5 (A). A signal is also sent to the lift coil controller 25, the lift coil 15 is activated, and the stud 11 is gradually lifted off the base material 14 against the resistance acting on the collet 13 as shown in Figure 5 (B). Once lifted, the pilot arc is generated. The stud 11 is kept at a specific height for a specific period of time. When the stud 11 is lifted from the base material 14, as shown in Figure 5 (C), a constant-level arc voltage is generated between the stud 11 and the base material 14. This is detected by the voltage detector 21 and sent to the sequence controller 23. The sequence controller 23 then makes sure the stud 11 is lifted off the base material 14.

After the pilot arc has been generated, the sequence controller 23 increases the current and supplies the main arc current from the power source 18 in the first stage to the stud in the second phase denoted by Phase II in Figure 5 (A). The main arc current in the first stage is set at a small-current arc effective enough at removing oil from the surface and surroundings of the section of the base material 14 to be melted. When performing the welding in an inactive gas atmosphere, the water component is scattered and does not contaminate the section of the stud to be melted. The small-current arc in the first stage is effective enough to perform pre-welding processing.

Next, the sequence controller 23 increases the current from the power source 18 and supplies the main arc current in the second stage to the stud 11 in the third phase denoted by Phase III in Figure 5 (A). The main arc current in the second stage welds the tip 29 of the stud 11 and the section of the base material 14 to be welded. This intermediate-current arc keeps the area of the section of the base material 14 to be melted within a predetermined range and positions the section to be melted with high precision.

In the fourth phase denoted by Phase IV after the third phase denoted by Phase III in Figure 5 (A), the sequence controller 23 increases the current even more and supplies the main arc current in the third phase from the power source 18 to the stud 11. The main arc current in the third stage is large enough to perform deep welding on the tip of the stud 11 and the section of the base material 14 to be welded. This is sufficient to weld the sections to be welded. The sequence controller 23 has a reference table stored in RAM or ROM memory containing data related to the welding of various types of studs and base materials. In Phases I, II, III and IV, the sequence controller 23 uses the signals from the voltage detector 21 indicating the stud 11 has been lifted as the initiation signals, and sets the proper timing and current levels accordingly. The power source 18 is a chopper high-frequency power source. The size of the current outputted is controlled by signals from an external source using pulse wave modulation (PWM). Therefore, the sequence controller 23 can set the appropriate pilot arc current and main arc current for the various stages and the appropriate length of time for the various stages based on the type of stud and base material being used.

When the third main arc in Phase IV is terminated, the main arc current from the power source 18 is stopped. In the present invention, the sequence controller 23 operates the lift coil controller 25 so the molten tip of the stud is forcibly brought into contact with the molten section of the base material to be welded in under 5 milli-seconds. Because the sequence controller 23 can check the reference table to determine when to end Phase IV (the third main arc stage), the current to the lift coil is stopped at the appropriate time before the end of the process, and a signal is sent to the lift coil controller 25 to forcibly bring the tip of the stud 11 into contact with the molten section of the base material 14 to be welded in under 5 milliseconds in Phase IV or after the third main arc stage has ended. In the present invention, the amount of time in which the tip of the stud is brought into contact with the base material is shortened, and the short current is limited to a brief period of time. Because the short current is brief, the splattering of molten metal is reduced by the pinch effect (a phenomenon in which the large current flowing through the molten fluid constricts the fluid, the constriction reduces the flow and lessens the constriction, and the lessening of the constriction once again constricts the molten fluid). In testing, the period of forcible contact was conducted within 0 and 4 milliseconds of ending the current. This significantly reduced the amount of splattering of molten metal.

The time T in Figure 5 (B) is the range of time in which the tip of the stud is brought forcibly into contact with the base material after the main arc current has been terminated. After Phase IV in Figure 5 (A), the current does not go down to zero immediately after the current is cut. Because some power remains in the circuit for supplying power to the stud 11 and the base material 14, the current cutoff time is denoted by dotted line 33 in the Figure. A stud contact signal from the sequence controller 23 is sent to the lift coil controller 25 during time 34 in Figure 5 (B) before the time 33 the current is cut. When the stud makes contact, the arc voltage in Figure 5 (C) goes to zero. This is detected by the voltage detector 21. The sequence controller 23 receives the signals from the voltage detector 21 and begins the contact timing.

When an aluminum or aluminum alloy stud 11 is forcibly brought into contact with an aluminum or aluminum alloy base material 11, as shown in Figure 2, the welding obtained is similar to that of a iron-based stud welded to an iron-based base material. In testing, the height of the aluminum-based stud 11 below the neck was about 2.6 mm, the reinforcing height (h in Figure 2) of the reinforcement 6 was less than 1 mm, and the diameter (d in Figure 2) of the reinforcement was less than 5 mm. A high welding strength was also maintained.

Because, in the present invention, the main arc current is divided into stages and increases incrementally in this welding method, the welding area of the section of the base material to be melted is kept within the desired range when the tip of the stud is being welded to the section of the base material to be melted, the tip of the stud and the section of the base material to be melted are melted into each other deeply, and the heat introduced to the stud and base material remains constant. Because the tip of the stud is applied under pressure to the base material in less time and the short current is controlled during this time, the splattering of molten metal is reduced by the pinch effect (a phenomenon in which the large current flowing through the molten fluid constricts the fluid, the constriction reduces the flow and lessens the constriction, and the lessening of the constriction once again constricts the molten fluid). This stabilizes the stud after welding at the desired height below the neck, keeps the height of the stud reinforcement and the diameter of the section to be welded within the appropriate ranges, and maintains a high welding strength. In addition, the aluminum-based stud is a T stud consisting of a large-diameter head and a rod-shaped shaft, and the profile of the end of the shaft is conical with a flat tip. As a result, the arc is concentrated in the center, the reinforcement does not tilt to one side, and the height of the reinforcement is kept from getting shorter.

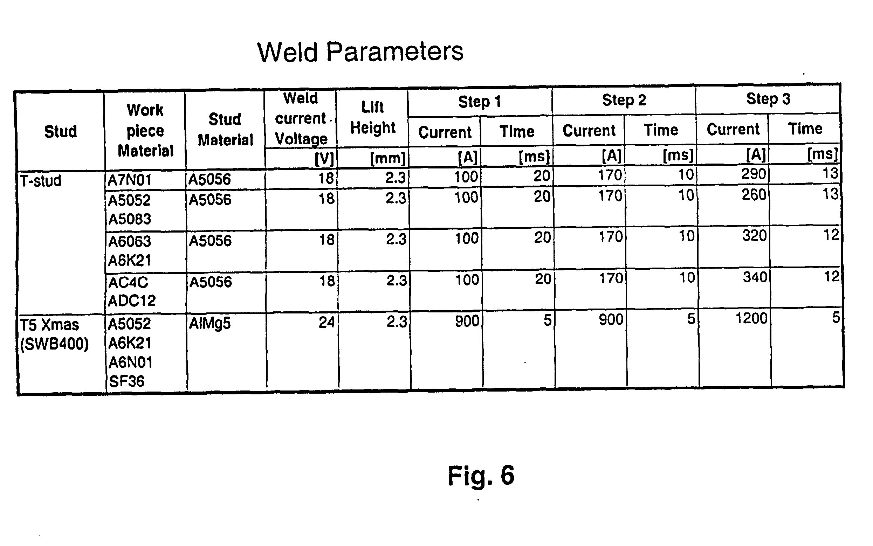

The preferred weld parameters for the present invention are shown in Figure 6. The weld parameters are first shown for different materials used with the previously disclosed T-stud. For example, when A7N01 is used for the base material 14 and A5056 is used for the stud 11, the weld current voltage is maintained at 18 volts, the lift height is maintained (for the lift motor or coil position relative to the workpiece although the welded tip may actually change as melting occurs) at 2.3 millimeters, the step 1 welding current average is maintained about 100 amps for about 20 milliseconds, the subsequent step 2 welding current average is maintained about 170 amps for about 10 milliseconds, and the subsequent step 3 welding current average is maintained about 290 amps for about 13 milliseconds. The final group of weld parameters are shown for a T5 Christmas ("Xmas") Tree style weld stud. The shape of this type of stud is disclosed in U.S. Patent No. 5,461,209 entitled "Stud Bolt" which issued to Yamada et al. on October 24, 1995, and is incorporated by reference herein.

Various aspects of the present invention have been disclosed but other embodiments can be used. For example, the preferred method and device can be used for weld studs which have differing shapes, such as those without a T-shaped or enlarged head, although some of the advantages may not be achieved. Furthermore, the stage timing, volts, amps and distances can be varied depending upon the specific stud and base material dimensions and materials utilized. While various materials and dimensions have been disclosed, it will be appreciated that other materials and dimensions may be readily employed. It is intended by the following claims to cover these and any other departures from the disclosed embodiments of this invention.

## Claims

1. A welding method comprising:
(a) an aluminum or aluminum alloy stud being brought into contact with an aluminum or aluminum alloy base material;
(b) voltage being applied between the stud and the base material;
(c) the stud being lifted slightly off the base material;
(d) a pilot arc with a small amount of current being generated;
(e) the main arc with a large amount of current being generated;
(f) melting the tip of the stud and the section of the base material to be melted;
(g) stopping lifting of the stud at a time before the main arc current has been cut off,
(h) pressuring the molten tip of the stud against the molten base material in under five milliseconds after the main arc current has been cut off; and
(i) welding together the stud and the base material.

2. The welding method of Claim 1 wherein the stud is a T stud consisting of a large-diameter head and a smaller-diameter, rod-shaped shaft.

3. The welding method of Claim 2 wherein a profile of the end of the shaft is conical with a flat tip.

4. The welding method of Claim 1 further comprising incrementally increasing current for the main arc into at least three steps, wherein the main arc in the first step is a small-current arc effective at removing oil from the surface and surroundings of the section of the base material to be melted, the main arc in the second step is an intermediate-current arc for melting the tip of the stud and the section of the base material to be melted and for keeping the area of the section of the base material to be melted within a predetermined range, and the main arc in the third step is a large-current arc for melting the tip of the stud and the section of the base material to be melted into each other deeply.

5. The welding method of Claim 1 wherein the stud has a cylindrical shaft, a substantially conical end extends from the shaft and a flat tip is on the conical end opposite the shaft.

6. The welding method of Claim 1 wherein steps (a) through (h) are performed substantially in sequential order.

7. The welding method of Claim 1 wherein:
(j) the weld current voltage is about 18-24 volts and the weld current is about 100-900 amps for about 5-20 milliseconds during a first period;
(k) the weld current voltage is substantially unchanged and the weld current is increased to about 170-900 amps for about 5-10 milliseconds during a subsequent second period; and
(1) the weld current voltage is substantially unchanged and the weld current is increased to about 260-1200 amps for about 5-13 milliseconds for a subsequent third period.

8. The welding method of Claim 1 comprising dividing a main welding current into at least three stages and incrementally increasing the welding current from the beginning stage to the end stage.

9. The welding method of Claim 8 further comprising incrementally increasing current for the main arc into at least three steps, wherein the main arc in the first step is a small-current arc effective at removing oil from the surface and surroundings of the section of the base to be melted, the main arc in the second step is an intermediate-current arc for melting the tip of the stud and the section of the base to be melted and for keeping the area of the section of the base to be melted within a predetermined range, and the main arc in the third step is a large-current arc for melting the tip of the stud and the section of the base to be melted into each other deeply.

10. A welding system comprising:
a stud;
a base;
a first device operably applying voltage between the stud and the base; and
a second device operably lifting the stud slightly off the base;
wherein in use a pilot arc with a small amount of current is generated, a main arc with a large amount of welding current is generated, and the tip of the stud and the section of the base are melted;
wherein in use pressure is applied to the tip of the stud and the section of the base that has been melted;
wherein in use the welding current is divided into stages from beginning to end and increased as the main arc is generated;
wherein in use lifting of the stud is stopped at a time before the main arc current has been cut off,
wherein in use the molten tip of the stud is applied under pressure to the molten base in under five milliseconds after the main arc current has been terminated; and
wherein in use the stud and base are operably welded together.

11. The welding system of Claim 10 wherein the stud is a T stud including a large-diameter head and a smaller-diameter, rod-shaped shaft.

12. The welding system of Claim 11 wherein a profile of the end of the shaft is substantially conical with a flat tip.

13. The welding system of Claim 10 wherein the stud is aluminum or an aluminum alloy.

14. The welding system of Claim 13 wherein the base is aluminum or an aluminum alloy.

15. The welding system of Claim 10 wherein the stud has a cylindrical shaft, a substantially conical end extends from the shaft and a flat tip is on the conical end opposite the shaft.

16. The welding system of Claim 10 wherein:
(i) the welding current voltage is about 18-24 volts and the weld current is about 100-900 amps for about 5-20 milliseconds during a first period;
(j) the welding current voltage is substantially unchanged and the weld current is increased to about 170-900 amps for about 5-10 milliseconds during a subsequent second period; and
(k) the welding current voltage is substantially unchanged and the weld current is increased to about 260-1200 amps for about 5-13 milliseconds for a subsequent third period.

17. The welding system of Claim 10 wherein there are three welding current stages and the main arc in the first stage is a small-current arc effective at removing oil from the surface and surroundings of the section of the base to be melted, the main arc in the second stage is an intermediate-current arc which operably melts the tip of the stud and the section of the base, and the main arc in the third stage is a large-current arc which operably melts the tip of the stud and the section of the base.

18. The welding system of Claim 10 wherein the welding current is divided into stages from beginning to end and incrementally increased as the main arc is generated.

## Patentansprüche

1. Schweißverfahren, wobei
(a) ein Bolzen aus Aluminium oder einer Aluminiumlegierung mit einem Grundwerkstoff aus Aluminium oder einer Aluminiumlegierung in Kontakt gebracht wird;
(b) zwischen dem Bolzen und dem Grundwerkstoff eine Spannung angelegt wird;
(c) der Bolzen von dem Grundwerkstoff etwas abgehoben wird;
(d) ein Pilotlichtbogen mit einer vom Betrag her geringen Stromstärke erzeugt wird;
(e) der Hauptlichtbogen mit einer vom Betrag her hohen Stromstärke erzeugt wird;
(f) die Spitze des Bolzens und der zu schmelzende. Bereich des Grundwerkstoffs angeschmolzen werden;
(g) das Abheben des Bolzens zu einem Zeitpunkt angehalten wird, bevor der Hauptlichtbogenstrom abgeschaltet worden ist;
(h) die angeschmolzene Spitze des Bolzens in weniger als 5 Millisekunden nach Abschalten des Hauptlichtbogenstroms an den angeschmolzenen Grundwerkstoff angedrückt wird; und
(i) der Bolzen und der Grundwerkstoff miteinander verschweißt werden.

2. Schweißverfahren nach Anspruch 1, wobei der Bolzen ein T-Bolzen ist, der aus einem Kopf größeren Durchmessers und einem stabförmigen Schaft kleineren Durchmessers besteht.

3. Schweißverfahren nach Anspruch 2, wobei das Ende des Schaftes ein konisches Profil mit einer abgeflachten Spitze aufweist.

4. Schweißverfahren nach Anspruch 1, wobei außerdem der Strom für den Hauptlichtbogen in wenigstens drei Stufen schrittweise erhöht wird, wobei der Hauptlichtbogen in der ersten Stufe ein Lichtbogen geringer Stromstärke ist, mit dem Öl von der Oberfläche und Umgebung des anzuschmelzenden Bereichs des Grundwerkstoffs entfernt wird, der Hauptlichtbogen in der zweiten Stufe ein Lichtbogen mittlerer Stromstärke ist, um die Spitze des Bolzens und den anzuschmelzenden Bereich des Grundwerkstoffs zu schmelzen und die Fläche des anzuschmelzenden Bereichs des Grundwerkstoffs in einem vorbestimmten Rahmen zu halten, und der Hauptlichtbogen in der dritten Stufe ein Lichtbogen hoher Stromstärke ist, um die Spitze des Bolzens und den anzuschmelzenden Bereich des Grundwerkstoffs tief miteinander zu verschmelzen.

5. Schweißverfahren nach Anspruch 1, wobei der Bolzen einen zylindrischen Schaft aufweist, sich von dem Schaft ein im wesentlichen konisches Ende erstreckt und das vom Schaft abgewandte konische Ende eine abgeflachte Spitze aufweist.

6. Schweißverfahren nach Anspruch 1, wobei die Schritte (a) bis (h) im wesentlichen nacheinander ausgeführt werden.

7. Schweißverfahren nach Anspruch 1, wobei
(j) für etwa 5-20 Millisekunden einer ersten Zeitspanne die Schweißspannung etwa 18-24 Volt und der Schweißstrom etwa 100-900 Ampere beträgt;
(k) für etwa 5-10 Millisekunden einer anschließenden zweiten Zeitspanne die Schweißspannung im wesentlichen unverändert bleibt und der Schweißstrom auf etwa 170-900 Ampere erhöht wird; und
(1) für etwa 5-13 Millisekunden einer anschließenden dritten Zeitspanne die Schweißspannung im wesentlichen unverändert bleibt und der Schweißstrom auf etwa 260-1200 Ampere erhöht wird.

8. Schweißverfahren nach Anspruch 1, wobei ein Hauptschweißstrom in wenigstens drei Stufen unterteilt und der Schweißstrom von der Anfangs- bis zur Endstufe schrittweise erhöht wird.

9. Schweißverfahren nach Anspruch 8, wobei außerdem der Strom für den Hauptlichtbogen in wenigstens drei Stufen schrittweise erhöht wird, wobei der Hauptlichtbogen in der ersten Stufe ein Lichtbogen geringer Stromstärke ist, mit dem Öl von der Oberfläche und Umgebung des anzuschmelzenden Bereichs des Grundwerkstoffs wirksam entfernt wird, der Hauptlichtbogen in der zweiten Stufe ein Lichtbogen mittlerer Stromstärke ist, um die Spitze des Bolzens und den anzuschmelzenden Bereich des Grundwerkstoffs zu schmelzen und die Fläche des anzuschmelzenden Bereichs des Grundwerkstoffs in einem vorbestimmten Rahmen zu halten, und der Hauptlichtbogen in der dritten Stufe ein Lichtbogen hoher Stromstärke ist, um die Spitze des Bolzens und den anzuschmelzenden Bereich des Grundwerkstoffs tief miteinander zu verschmelzen.

10. Schweißsystem, umfassend:
einen Bolzen;
einen Grundwerkstoff;
eine erste Vorrichtung, mit der zwischen dem Bolzen und dem Grundwerkstoff eine Spannung anlegbar ist; und
eine zweite Vorrichtung, mit der der Bolzen von dem Grundwerkstoff etwas abgehoben werden kann;
wobei im Betrieb ein Pilotlichtbogen mit einer vom Betrag her geringen Stromstärke, ein Hauptlichtbogen mit einer vom Betrag her hohen Schweißstromstärke erzeugt wird und die Spitze des Bolzens und der Bereich des Grundwerkstoffs angeschmolzen werden;
wobei im Betrieb die Spitze des Bolzens und der angeschmolzene Bereich des Grundwerkstoffs mit Druck beaufschlagt werden;
wobei im Betrieb während der Erzeugung des Hauptlichtbogens der Schweißstrom von Anfang bis Ende in Stufen unterteilt und erhöht wird;
wobei im Betrieb das Abheben des Bolzens zu einem Zeitpunkt angehalten wird, bevor der Hauptlichtbogenstrom abgeschaltet worden ist;
wobei im Betrieb die angeschmolzene Spitze des Bolzens in weniger als 5 Millisekunden nach Abschalten des Hauptlichtbogenstroms an den angeschmolzenen Grundwerkstoff angedrückt wird; und
wobei im Betrieb der Bolzen und der Grundwerkstoff miteinander verschweißt werden.

11. Schweißsystem nach Anspruch 10, wobei der Bolzen ein T-Bolzen ist, der aus einem Kopf größeren Durchmessers und einem stabförmigen Schaft kleineren Durchmessers besteht.

12. Schweißsystem nach Anspruch 11, wobei das Ende des Schaftes ein im wesentlichen konisches Profil mit einer abgeflachten Spitze aufweist.

13. Schweißsystem nach Anspruch 10, wobei der Bolzen aus Aluminium oder einer Aluminiumlegierung besteht.

14. Schweißsystem nach Anspruch 13, wobei der Grundwerkstoff aus Aluminium oder einer Aluminiumlegierung besteht.

15. Schweißsystem nach Anspruch 10, wobei der Bolzen einen zylindrischen Schaft aufweist, sich von dem Schaft ein im wesentlichen konisches Ende erstreckt und das vom Schaft abgewandte konische Ende eine abgeflachte Spitze aufweist.

16. Schweißsystem nach Anspruch 10, wobei:
(i) für etwa 5-20 Millisekunden einer ersten Zeitspanne die Schweißspannung etwa 18-24 Volt und der Schweißstrom etwa 100-900 Ampere beträgt;
(j) für etwa 5-10 Millisekunden einer anschließenden zweiten Zeitspanne die Schweißspannung im wesentlichen unverändert bleibt und der Schweißstrom auf etwa 170-900 Ampere erhöht wird; und
(k) für etwa 5-13 Millisekunden einer anschließenden dritten Zeitspanne die Schweißspannung im wesentlichen unverändert bleibt und der Schweißstrom auf etwa 260-1200 Ampere erhöht wird.

17. Schweißsystem nach Anspruch 10, wobei drei Stufen für den Schweißstrom vorgesehen sind und der Hauptlichtbogen in der ersten Stufe ein Lichtbogen geringer Stromstärke ist, mit dem Öl von der Oberfläche und Umgebung des anzuschmelzenden Bereichs des Grundwerkstoffs wirksam entfernt wird, der Hauptlichtbogen in der zweiten Stufe ein Lichtbogen mittlerer Stromstärke ist, mit dem die Spitze des Bolzens und der Bereich des Grundwerkstoffs schmelzbar sind, und der Hauptlichtbogen in der dritten Stufe ein Lichtbogen hoher Stromstärke ist, mit dem die Spitze des Bolzens und der Bereich des Grundwerkstoffs schmelzbar sind.

18. Schweißsystem nach Anspruch 10, wobei während der Erzeugung des Hauptlichtbogens der Schweißstrom von Anfang bis Ende in Stufen unterteilt und schrittweise erhöht wird.

## Revendications

1. Procédé de soudure consistant à :
(a) mettre un goujon d'aluminium ou d'alliage d'aluminium en contact avec un matériau de base en aluminium ou alliage d'aluminium ;
(b) appliquer une tension entre le goujon et le matériau de base ;
(c) soulever légèrement le goujon par rapport au matériau de base ;
(d) générer un arc pilote à l'aide d'une faible quantité de courant ;
(e) générer un arc principal à l'aide d'une grande quantité de courant ;
(f) fondre la pointe du goujon et la section du matériau de base devant être fondue ;
(g) arrêter de soulever le goujon à un moment précédant la coupure du courant de l'arc principal ;
(h) presser la pointe fondue du goujon contre le matériau de base fondu en moins de 5 millisecondes après l'interruption du courant de l'arc principal ; et
(i) souder l'un à l'autre le goujon et le matériau de base.

2. Procédé de soudure selon la revendication 1, dans lequel le goujon consiste en un goujon en forme de T comprenant une tête de grand diamètre et un fût en forme de tige d'un diamètre plus petit.

3. Procédé de soudure selon la revendication 2, dans lequel un profil de l'extrémité du fût est conique et comporte une pointe plate.

4. Procédé de soudure selon la revendication 1, consistant à augmenter de manière incrémentale le courant de l'arc principal en au moins trois étapes, dans lequel l'arc principal dans la première étape consiste en un arc à faible courant permettant d'éliminer l'huile de la surface et des environs de la section du matériau de base devant être fondue, l'arc principal dans la seconde étape consiste en un arc à courant intermédiaire qui fait fondre la pointe du goujon et la section du matériau de base devant être fondue et qui maintient la surface de la section du matériau de base devant être fondue dans une plage prédéterminée, et l'arc principal dans la troisième étape consiste en un arc à fort courant qui fait fondre l'une dans l'autre et en profondeur la pointe du goujon et la section du matériau de base devant être fondue.

5. Procédé de soudure selon la revendication 1, dans lequel le goujon comporte un fût cylindrique, tandis qu'une extrémité essentiellement conique s'étend depuis le fût et qu'une pointe plate est formée sur l'extrémité conique opposée au fût.

6. Procédé de soudure selon la revendication 1, dans lequel les étapes (a) à (h) sont réalisées essentiellement selon un ordre séquentiel.

7. Procédé de soudure selon la revendication 1, dans lequel :
(j) la tension du courant de soudure est d'environ 18 - 24 volts et le courant de soudure est d'environ 100 - 900 ampères pendant environ 5 - 20 millisecondes pendant une première période ;
(k) la tension du courant de soudure reste essentiellement inchangée et le courant de soudure augmente jusqu'à environ 170 - 900 ampères pendant environ 5 à 10 millisecondes durant une seconde période suivante ; et
(1) la tension du courant de soudure reste essentiellement inchangée et le courant de soudure augmente jusqu'à environ 260 - 1200 ampères pendant environ 5 à 13 millisecondes durant une troisième période suivante.

8. Procédé de soudure selon la revendication 1, consistant à diviser un courant de soudure principal sur au moins trois stades et à augmenter de manière incrémentale le courant de soudure depuis le stade initial jusqu'au stade final.

9. Procédé de soudure selon la revendication 8, consistant en outre à augmenter de manière incrémentale le courant de soudure pour l'arc principal en au moins trois étapes, dans lequel l'arc principal dans la première étape consiste en un arc à faible courant permettant d'éliminer l'huile de la surface et des environs de la section du matériau de base devant être fondue, l'arc principal dans la seconde étape consiste en un arc à courant intermédiaire qui fait fondre la pointe du goujon et la section du matériau de base devant être fondue et qui maintient la surface de la section du matériau de base devant être fondue dans une plage prédéterminée, et l'arc principal dans la troisième étape consiste en un arc à fort courant qui fait fondre l'une dans l'autre et en profondeur la pointe du goujon et la section du matériau de base devant être fondue.

10. Système de soudure comprenant :
- un goujon
- une base ;
- un premier dispositif appliquant fonctionnellement une tension entre le goujon et la base ; et
- un second dispositif soulevant fonctionnellement et légèrement le goujon ;
dans lequel, lors de l'utilisation, on génère un arc pilote à l'aide d'une faible quantité de courant, on génère un arc principal à l'aide d'une grande quantité de courant, et la pointe du goujon et la section de la base sont fondues ;
dans lequel, lors de l'utilisation, une pression est appliquée à la pointe du goujon et à la section de la base qui ont été fondues ;
dans lequel, lors de l'utilisation, le courant de soudure est divisé en stades allant d'un stade initial à un stade final, et est augmenté à mesure que l'arc principal est généré ;
dans lequel, lors de l'utilisation, le soulèvement du goujon est interrompu à un moment précédant la coupure du courant de l'arc principal ;
dans lequel, lors de l'utilisation, la pointe fondue du goujon est appliquée sous pression contre la base fondue en moins de 5 millisecondes après l'interruption du courant de l'arc principal ; et
dans lequel, lors de l'utilisation, le goujon et la base sont fonctionnellement soudés l'un à l'autre.

11. Système de soudure selon la revendication 10, dans lequel le goujon consiste en un goujon en forme de T comprenant une tête de grand diamètre et un fût en forme de tige d'un diamètre plus petit.

12. Système de soudure selon la revendication 11, dans lequel le profil de l'extrémité du fût est essentiellement conique et comporte une pointe plate.

13. Système de soudure selon la revendication 10, dans lequel le goujon est fait d'aluminium ou d'un alliage d'aluminium.

14. Système de soudure selon la revendication 13, dans lequel la base est faite d'aluminium ou d'un alliage d'aluminium.

15. Système de soudure selon la revendication 10, dans lequel le goujon comporte un fût cylindrique, tandis qu'une extrémité essentiellement conique s'étend depuis le fût et qu'une pointe plate est formée sur l'extrémité conique opposée au fût.

16. Système de soudure selon la revendication 10, dans lequel :
(i) la tension du courant de soudure est d'environ 18 - 24 volts et le courant de soudure est d'environ 100 - 900 ampères pendant environ 5-20 millisecondes pendant une première période ;
(j) la tension du courant de soudure reste essentiellement inchangée et le courant de soudure augmente jusqu'à environ 170 - 900 ampères pendant environ 5 à 10 millisecondes durant une seconde période suivante ; et
(k) la tension du courant de soudure reste essentiellement inchangée et le courant de soudure augmente jusqu'à environ 260 - 1200 ampères pendant environ 5 à 13 millisecondes durant une troisième période suivante.

17. Système de soudure selon la revendication 10, dans lequel on utilise trois stades de courant de soudure, et dans lequel l'arc principal dans le premier stade consiste en un arc à faible courant permettant d'éliminer l'huile de la surface et des environs de la section de la base devant être fondue, l'arc principal dans le second stade consiste en un arc à courant intermédiaire qui fait fondre fonctionnellement la pointe du goujon et la section de la base, et l'arc principal dans le troisième stade consiste en un arc à fort courant qui fait fondre fonctionnellement la pointe du goujon et la section de base.

18. Système de soudure selon la revendication 10, dans lequel le courant de soudure est divisé en stades allant d'un stade initial à un stade final, et est augmenté de manière incrémentale à mesure que l'arc principal est généré.
